# FASCICULE DE BREVET EUROPEEN

(11) **EP 0 473 505 B1**
(45) Date de publication et mention de la délivrance du brevet: **06.10.1993**
(21) Numéro de dépôt: 91402314.8
(22) Date de dépôt: 26.08.1991
(51) Int. Cl.: G01M 15/00

(54) **Procédé et appareil pour déterminer des caractéristiques de fonctionnement d'un moteur à explosion à alimentation indépendante des cylindres**
Verfahren und Vorrichtung zur Bestimmung der Funktionsmerkmale eines Motors mit unabhängiger Zylinderversorgung
Procedure and apparatus for the determination of the functional characteristics of a motor with independent cylinder feeds

(30) Priorité: 29.08.1990 FR 9010781
(43) Date de publication de la demande: 04.03.1992
(73) Titulaire: SOURIAU DIAGNOSTIC ELECTRONIQUE S.A., F-91550 Paray-Vieille-Poste (FR)
(72) Inventeur: Vernier, Yannick, 91300 Massy (FR)
(74) Mandataire: Gorree, Jean-Michel

(56) Documents cités:
- FR-A- 2 345 590
- FR-A- 2 347 537
- GB-A- 2 100 006

## Description

La présente invention concerne des perfectionnements apportés à la détermination des caractéristiques de fonctionnement des moteurs à explosion et, de façon plus précise, elle concerne un procédé et un appareil pour déterminer des caractéristiques de fonctionnement d'au moins un cylindre dans un moteur à explosion dans lequel chaque cylindre est pourvu d'un conduit d'admission du mélange air-carburant qui est équipé d'un organe de réglage de débit dudit mélange et qui débouche dans le cylindre par un orifice d'admission, un capteur de pression externe étant relié audit conduit d'admission entre l'organe de réglage et l'orifice d'admission dans le cylindre.

Il est connu de déterminer des paramètres de fonctionnement (par exemple tachymétrique) d'un moteur à explosion par prélèvement de grandeurs électriques (allumage, capteur sur volant moteur, etc.). Toutefois, les appareils de mesure réalisés sur cette base sont dépendants de la construction du moteur ; en outre ils sont très sensibles aux parasites électriques conduits et rayonnés (présence des circuits sous haute-tension) et l'obtention du signal utile se révèle difficile en pratique.

Il est également connu d'utiliser un capteur de pression relié à la conduite d'admission entre l'organe de réglage de débit du mélange air-carburant (papillon) et l'orifice d'admission dans le cylindre. Le document DE-32 12 561 décrit par exemple un dispositif permettant de surveiller le fonctionnement d'un tel capteur. Le recours à un capteur de pression permet certes de s'affranchir des problèmes posés par les parasites électriques dans les appareils précédemment cités ; toutefois, ces appareils connus à capteur de pression sont agencés de manière telle qu'ils fournissent une indication correspondant seulement à la valeur moyenne de la pression règnant dans la conduite d'admission entre l'organe de règlage et l'orifice d'admission. Or, la connaissance de la valeur moyenne de la pression ne permet d'obtenir qu'un nombre restreint d'informations sur le fonctionnement du cylindre, et plus généralement du moteur. En outre, il n'est pas possible d'effectuer, à partir de cette valeur moyenne, un relevé tachymétrique.

Le document GB-A-2 100 006 enseigne l'utilisation, en remplacement des capteurs électromagnétiques ou optoélectroniques de l'art antérieur, d'un capteur de pression disposé sur la conduite d'admission générale d'un moteur pour mesurer la position angulaire du vilebrequin. Le dispositif décrit dans ce document prévoit à cet effet de mesurer la valeur moyenne ainsi que les fluctuations du signal électrique de pression autour de cette valeur moyenne dans le but unique de générer des créneaux ou des pics correspondant à la position angulaire du moteur. Il n'envisage pas d'analyser en continu les variations de la pression d'admission, fonction des conditions opérationnelles du moteur, qui, selon ce document, sont néfastes à la mesure de la position angulaire du moteur. De plus, ce dispositif, compte tenu de la disposition du capteur, reste sensible aux parasites électriques générés par le moteur.

Enfin, on connait également, d'après le document FR-A-2 345 590, un appareil de contrôle de fonctionnement de moteurs à combustion interne, cet appareil comprenant un transducteur qui est associé à un dispositif portant contre une buse d'injection de carburant sous pression logée dans un orifice d'entrée de ces cylindres et qui produit un signal électrique en réponse à des variations de pression apparaissant dans le cylindre. L'appareil permet d'obtenir une information sur le comportement interne du moteur.

L'inconvénient de cet appareil connu est que les transducteurs sont montés à demeure sur le moteur en association avec les buses d'injection. Il en résulte donc la nécessité d'un prééquipement des moteurs, soit en fabrication, soit déjà existants. Ce prééquipement n'est pas compatible avec la simplicité de la mesure recherchée par la présente invention. De plus, il se poserait un problème d'adaptation de l'appareil de mesure proprement dit avec des transducteurs d'origines diverses, voire de conceptions diverses, qui serait difficilement surmontable pour obtenir des mesures fiables lorsque le même appareil serait connecté successivement sur des moteurs différents munis d'équipements différents.

En outre, ce dispositif bien adapté à la mesure des fortes pressions d'injection de carburant rencontrées dans les moteurs diesel resterait sensible aux parasites électriques rayonnés rencontrés dans les moteurs à allumage par haute tension.

L'invention a donc essentiellement pour but de proposer un procédé et un appareil qui remédient, dans toute la mesure du possible, aux inconvénients des procédés et appareils actuellement connus et qui permettent d'accéder à la connaissance d'un plus grand nombre de paramètres de fonctionnement du cylindre et/ou du moteur, et cela d'une façon continue au cours du fonctionnement du moteur et quel que soit le type (deux temps, quatre temps, rotatif) du moteur à explosion à alimentation indépendante de chaque cylindre (en général cas des moteurs rapides, notamment utilisés sur les motocyclettes), ce procédé et cet appareil devant en outre être simples à mettre en oeuvre et ne devant notamment pas nécessiter de modifications ou d'aménagements des moteurs.

Ce but est atteint par l'appareil et le procédé respectivement définis par les revendications 1 et 9. Les revendications dépendantes 2 - 8 et 10 - 16 décrivent les caractéristiques des modes de réalisation préférés.

L'invention sera mieux comprise à la lecture de la description détaillée qui suit de certains de ses modes de réalisation donnés uniquement à titre d'exemple non limitatif ; dans cette description on se réfère aux dessins annexés sur lesquels :
- la figure 1 est une représentation très schématique d'un cylindre de moteur à explosion à quatre temps agencé en conformité avec l'invention ;
- la figure 2a est une courbe montrant l'évolution normale de la pression en fonction du temps dans la conduite d'admission du cylindre de moteur à quatre temps de la fig. 1, telle qu'elle peut être relevée dans le contexte de l'invention ;
- les figures 2B, 2C et 2D sont des courbes montrant l'évolution anormale de la pression en fonction du temps respectivement dans le cas d'une soupape d'admission défectueuse, d'une soupape d'échappement défectueuse et de l'existence d'une prise d'air sur le collecteur d'admission ;
- les figures 3 et 4 sont des courbes analogues à celles de la figure 2A et relatives respectivement à un moteur à deux temps et à un moteur rotatif ;
- la figure 5 est un schéma synoptique d'un exemple d'appareil tachymétrique mettant en oeuvre le procédé de l'invention ;
- la figure 6 représente la suite des impulsions délivrées par l'appareil de la fig. 5, en correspondance chronologique avec la fig. 2A ; et
- la figure 7 est un schéma synoptique montrant l'appareil tachymétrique intégrant une fonction de réglage des cylindres d'un moteur.

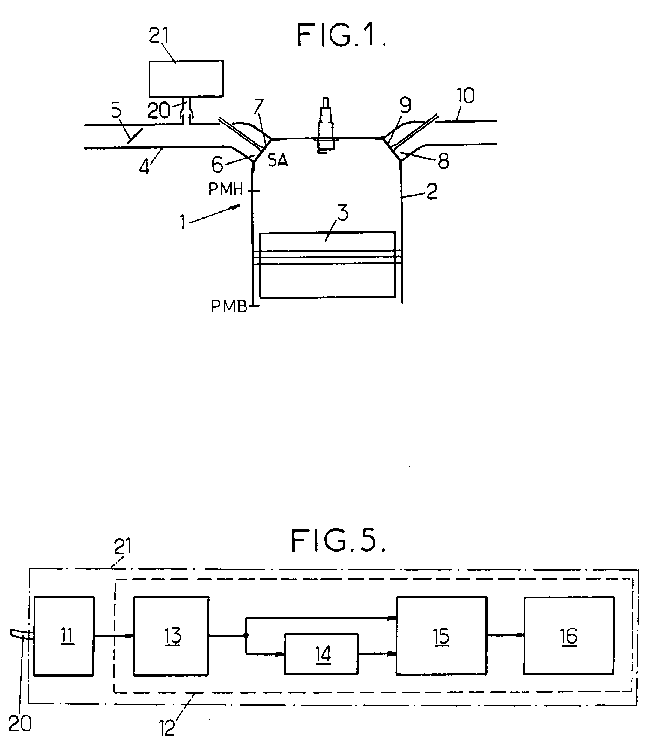

En se reportant tout d'abord à la figure 1, chaque cylindre 1 d'un moteur à explosion à quatre temps comprend une chemise 2 et un piston 3 animé d'un mouvement alternatif entre un point mort haut (PMH) et un point mort bas (PMB). Une conduite 4 d'alimentation en mélange air-combustible, réglable à l'aide d'un organe de réglage ou papillon orientable 5, est raccordé à un orifice d'admission 6 obturable par une soupape d'admission 7. De même les gaz brûlés sont évacués par un orifice de sortie 8 obturable par une soupape d'échappement 9 et raccordée à un conduit d'échappement 10.

Un appareil de contrôle ou contrôleur 21 comportant un capteur de pression 11, par exemple du type piézo-électrique, est relié à la conduite d'admission, entre le papillon de réglage 5 et la soupape d'admission 7, à l'aide d'un tuyau souple 20 raccordé à une prise ou attente prévue sur la tubulure d'admission, de manière à détecter la pression instantanée dans cette portion de la conduite d'admission. Le signal de pression détecté par le capteur est transformé en un signal électrique de sortie qui reproduit les variations de la pression à laquelle est soumise la cellule, et ce signal électrique est appliqué à une unité de traitement de signal 12 (dont un exemple sera donné plus loin), faisant partie du contrôleur et apte à fournir sous une forme appropriée les informations déductibles de l'analyse de l'évolution de cette pression dans la conduite d'admission. Un capteur de type piézo-électrique fournit directement un signal électrique de sortie représentatif de la variation de la pression.

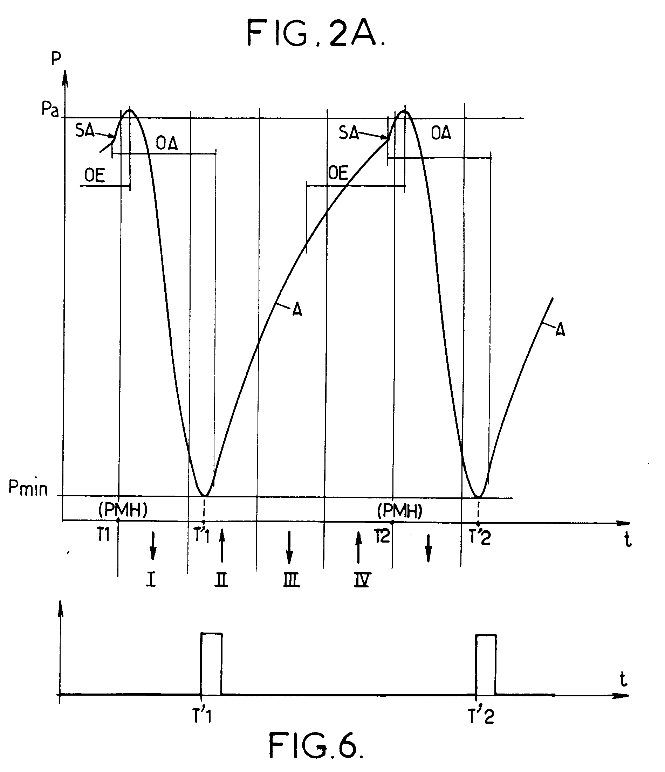

A la figure 2A, on a représenté, en trait plein, la courbe de variation, en fonction du temps, de la pression p dans la conduite d'admission entre le papillon de réglage et la soupape d'admission. Sur cette courbe on a repéré par des chiffres romains les phases successives d'un cycle de fonctionnement du cylindre, savoir :
I = phase d'admission
II = phase de compression
III = phase de détente
IV = phase d'échappement.

On a désigné par OA et OE les temps d'ouverture des soupapes respectivement d'admission et d'échappement.

A l'instant T₁ de franchissement du point mort haut (PMH) par le piston, la pression dans la conduite d'admission 4 est celle du mélange air-combustible, c'est-à-dire légèrement supérieure à la pression atmosphérique pₐ. La soupape d'admission 7 étant ouverte (ouverture anticipée : flèche SA), à l'instant T₁ le piston amorce son mouvement en direction du point mort bas en provoquant une aspiration. La pression dans la conduite 4 décroit jusqu'à une valeur Pₘᵢₙ atteinte peu avant la fermeture de la soupape 7. Puis durant les phases de compression, de détente et d'échappement, la pression dans la conduite 4 croît jusqu'à l'instant T₂ de nouveau franchissement du point mort haut PMH par le piston.

La détection de paramètres caractéristiques de la courbe de la figure 2A et/ou le relevé et l'analyse de cette courbe permettent de déterminer si le cylindre fonctionne correctement ou non et également d'en effectuer un réglage précis.

Ainsi la détection des instants T₁ et T₂ doit permettre de déterminer la période de fonctionnement du moteur (T₂ - T₁)/2. Il est donc possible de réaliser un appareil tachymétrique basé sur la détection des crêtes successives du signal de pression prélevé sur la conduite d'entrée entre le papillon de réglage et la soupape d'admission.

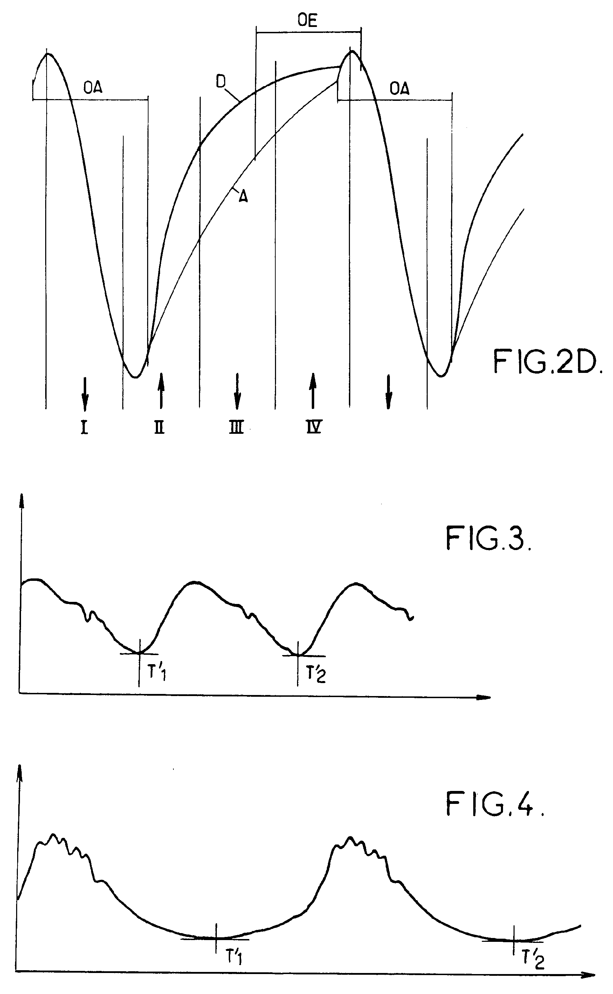

Des agencements analogues avec des capteurs de pression peuvent être envisagés pour le relevé de la pression dans la conduite d'admission de chaque cylindre d'un moteur à deux temps (fig. 3) ou d'un moteur rotatif (fig. 4). Toutefois, la localisation du point à pression maximale est alors difficile (moteur rotatif ou moteur à deux temps) et il est souhaitable, si l'on désire réaliser un appareil de détection universel, d'effectuer la détection des minimums de pression.

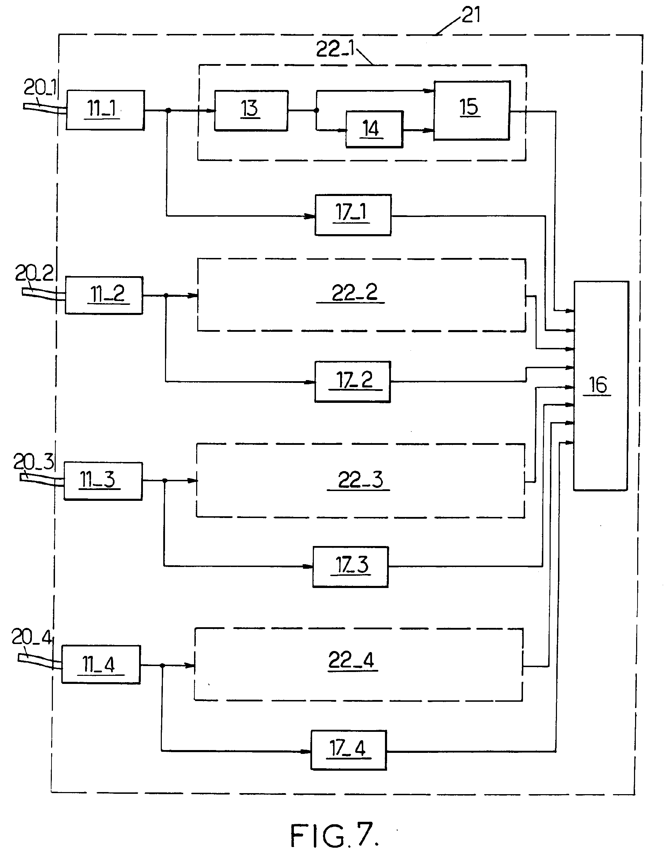

La figure 5 montre l'agencement schématique d'un tel appareil. Le signal électrique de sortie du capteur 11 subit une inversion en 13 de manière que la détection du minimum de pression soit ramené à la détection d'un maximum de signal. Le signal ainsi obtenu est appliqué, d'une part, à un dispositif 14 de détection de crêtes et, d'autre part, à une entrée d'un comparateur 15 dont l'autre entrée reçoit le signal de sortie du dispositif de détection de crêtes 14. Le signal de sortie du comparateur 15 est constitué par une suite d'impulsions apparaissant à des instants T'₁, T'₂,... en coïncidence avec les minimums de pression de la conduite d'admission, comme représenté à la fig. 6 (l'échelle des temps de la fig. 6 est en correspondence avec l'échelle des temps de la fig. 2A). Enfin, une unité de calcul 16 détermine les valeurs successives (T'₂ - T'₁)/2 représentant la période du cycle du cylindre, d'où une connaissance exacte de la vitesse de rotation instantanée et/ou moyenne du moteur. Un appareil ainsi agencé est alors universel et est à même de réaliser des mesures tachymétriques non seulement sur des moteurs à quatre temps, mais aussi sur des moteurs à deux temps ou rotatifs.

Un tachymètre pneumatique de ce type est indépendant de l'architecture du moteur et de ses constituants et il reste insensible aux parasites électriques, contrairement aux tachymètres connus qui opèrent classiquement par prélèvement de grandeurs électriques (allumage, capteur sur volant moteur,...).

La mesure tachymétrique qui vient d'être décrite peut être effectuée sans qu'il soit nécessaire de relever de façon effective la courbe de pression.

Par contre, un relevé de la courbe de pression rend possible un diagnostic sur le fonctionnement du cylindre, par comparaison avec une courbe de référence correspondant à des conditions parfaites de fonctionnement (courbe A de la fig. 2A).

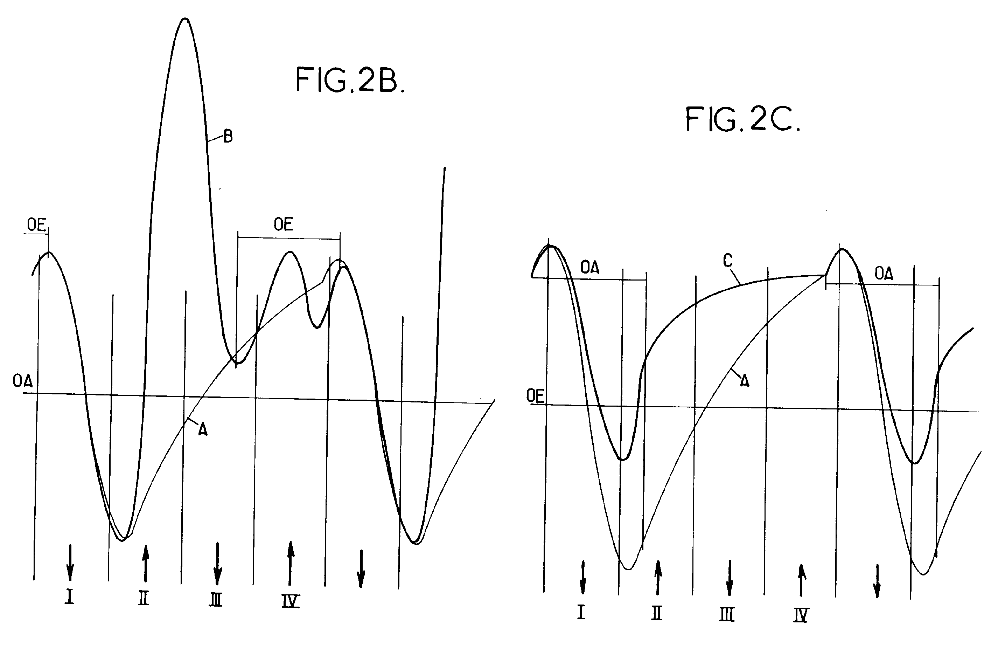

A titre d'exemple, dans le cas où il existe une fuite au niveau de la soupape d'admission (déformation de la tête de soupape, siège usé,...), la pression élevée règnant dans le cylindre au cours de la phase de compression est transmise, au moins en partie, par la fuite et la remontée en pression dans la conduite d'admission, à partir de la valeur Pₘᵢₙ, s'effectue très rapidement (courbe B de la fig. 2B).

De la même manière, une fuite au niveau de la soupape d'échappement (déformation de la tête de soupape, siège usé,...) est décelable par le fait que la valeur minimale de la pression détectée par le capteur reste supérieure à la valeur Pₘᵢₙ obtenue en fonctionnement normal (courbe C de la fig. 2C).

De la même manière, la présence d'une prise d'air parasite sur la conduite d'admission est décelable par le fait que la remontée en pression dans la conduite d'admission, à partir de la valeur Pₘᵢₙ et jusqu'à la valeur de la pression atmosphérique Pa ambiante, s'effectue beaucoup plus rapidement (courbe D de la fig. 2D).

Dans le cas spécifique d'un moteur à quatre temps, le relevé de la courbe de la fig. 2A permet de déterminer les points de "cassure" (repérés par SA sur la fig. 2A) correspondant aux instants d'ouverture de la soupape d'admission 6 ; la connaissance du diagramme de distribution permet alors le positionnement des points caractéristiques du cycle moteur.

L'appareil représenté à la fig. 5 est un appareil à une seule voie, c'est-à-dire ne comportant qu'une seule prise de pression (tuyau 20), un seul capteur de pression 11 et une seule ligne de mesure 12 ; il n'est donc apte à effectuer des mesures et des contrôles que sur un seul cylindre à la fois. Le contrôle du fonctionnement d'un moteur à plusieurs cylindres nécessite alors l'adjonction de moyens de mémorisation des informations relevées indépendemment pour les cylindres individuels afin de rendre possibles des réglages comparatifs (équilibrages par exemple).

Une solution plus avantageuse, autorisant une prise d'informations simultanément sur tous les cylindres (par exemple au nombre de quatre) d'un moteur, consiste à avoir recours à l'appareil de la fig. 7 qui regroupe plusieurs lignes de mesure (quatre en l'occurrence) affectées chacune à un cylindre du moteur. Comme précédemment chaque capteur de pression 11-1 à 11-4 est raccordé à un circuit respectif de traitement du signal électrique 22-1 à 22-4. En outre, en parallèle sur les circuits 22-1 à 22-4, on prévoit un circuit 17-1 à 17-4 de traitement du signal électrique de sortie du capteur 11-1 à 11-4 agencé pour fournir la valeur moyenne dudit signal.

Les sorties respectives des circuits 22-1 à 22-4 et 17-1 à 17-4 sont raccordées à une unité commune 16 de gestion et d'exploitation des informations obtenues avantageusement constituée sous forme d'un microprocesseur. Ce grâce à quoi il est possible de comparer instantanément les fonctionnements des cylindres et d'effectuer un réglage du moteur, par exemple en agissant sur les organes respectifs de réglage de débit 5 jusqu'à l'obtention de caratéristiques identiques pour chacun des cylindres.

Ainsi, les dispositions conformes à l'invention permettent, à partir d'une information de pression prélevée dans le collecteur d'admission d'un cylindre, d'obtenir des caractéristiques exactes et précises de fonctionnement du cylindre et, au-delà, de fonctionnement d'un moteur, ce que ne permettraient pas les appareils antérieurs. En outre, tous les composants de l'appareil de contrôle, y compris le ou les capteurs de pression, sont rassemblés dans un même boîtier contenant par ailleurs toute l'électronique associée et seul le ou les organes de liaison, constitués sous forme d'un simple tuyau souple, sont amenés au cylindre et/ou au moteur. Il en résulte une simplification de mise en oeuvre et surtout on écarte les risques de mauvaises mises en place que l'on rencontrait dans les appareils antérieurs dans lesquels le capteur était situé hors du boîtier et devait être installé sur le moteur, par exemple contre la tubulure d'admission au moyen d'une pince appropriée ; on écarte simultanément les erreurs introduites par des efforts imparfaits d'application des capteurs contre la tubulure, la nécessité d'étalonnages nombreux et délicats, ainsi que les risques d'endommagement encourus par les capteurs non protégés dans un boîtier.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

## Revendications

1. Appareil pour déterminer des caractéristiques de fonctionnement d'un moteur à explosion à plusieurs cylindres dans lequel chaque cylindre est pourvu d'un conduit d'admission du mélange air-carburant qui est équipé d'un organe de réglage du débit dudit mélange et qui débouche dans ledit cylindre par un orifice d'admission, un capteur de pression piézoélectrique externe étant relié audit conduit d'admission entre l'organe de réglage et l'orifice d'admission dans le cylindre, le capteur de pression étant indépendant des composants à contrôler et étant agencé pour détecter de façon continue la pression dans le conduit d'admission entre l'organe de réglage et l'orifice d'admission dans le cylindre, l'appareil comprenant des moyens pour convertir ladite pression de façon continue en un signal électrique analogique représentatif de ladite pression et de ses variations, des moyens de traitement du signal électrique, ces moyens de traitement comprenant des moyens pour afficher en continu la courbe représentative des variations de ce signal électrique.

2. Appareil selon la revendication 1, comprenant en outre des moyens (12) de traitement du signal électrique aptes à fournir des informations représentatives d'au moins une caractéristique souhaitée du fonctionnement du cylindre.

3. Appareil selon l'une des revendications 1 et 2, comprenant en outre des moyens de traitement du signal électrique de manière à obtenir les valeurs moyennes correspondantes pour chaque cylindre du moteur.

4. Appareil selon l'une quelconque des revendications 1 à 3, caractérisé en ce que le capteur est relié au conduit d'admission à l'aide d'un tuyau souple.

5. Appareil selon l'une quelconque des revendications 1 à 4, caractérisé en ce que les moyens de traitement du signal électrique (12) comprennent en outre des moyens de détection aptes à détecter les crêtes du signal électrique, des moyens de mesure du temps aptes à mesurer la durée séparant deux crêtes successives et des moyens de calcul aptes à en déduire la vitesse de rotation du moteur.

6. Appareil selon la revendication 5, caractérisé en ce qu'il est agencé pour que les moyens de détection détectent les crêtes inférieures du signal électrique.

7. Appareil selon la revendication 5, caractérisé en ce que les moyens de traitement du signal électrique (12) comprennent:
- des moyens inverseurs (13) pour inverser le signal électrique fourni par les moyens convertisseurs,
- les moyens de détection de crête (14) étant connectés à la sortie desdits moyens inverseurs,
- des moyens comparateurs (15) pour comparer le signal fourni par les moyens inverseurs (15) et le signal fourni par les moyens de détection de crête (14),
- et des moyens (16) d'exploitation du signal de sortie des moyens comparateurs (15).

8. Appareil selon l'une quelconque des revendications 1 à 7, caractérisé en ce qu'il comporte en outre des moyens (17) de moyennage des valeurs du signal analogique délivré par le capteur de pression (11).

9. Procédé pour déterminer des caractéristiques de fonctionnement d'un moteur à explosion à plusieurs cylindres dans lequel chaque cylindre est pourvu d'un conduit d'admission du mélange air-carburant qui est équipé d'un organe de réglage du débit dudit mélange et qui débouche dans ledit cylindre par un orifice d'admission, un capteur de pression piézoélectrique externe étant relié audit conduit d'admission entre l'organe de réglage et l'orifice d'admission dans le cylindre, procédé comprenant des étapes de
- détecter de facon continue la pression dans le conduit d'admission entre l'organe de réglage et l'orifice d'admission dans le cylindre,
- convertir ladite pression de facon continue en un signal électrique analogique représentatif de ladite pression et de ses variations, et de
- traiter le signal électrique, pour afficher en continu la courbe représentative des variations de ce signal électrique.

10. Procédé selon la revendication 9, caractérisé en ce que, dans une étape supplémentaire, on compare les caractéristiques de l'ensemble des cylindres du moteur.

11. Procédé selon la revendication 9 ou 10, caractérisé en ce qu'on affiche en continu la courbe représentative de l'évolution de ce signal électrique dans le temps, en ce qu'on compare la courbe relevée avec une courbe de référence et en ce qu'on en déduit un diagnostic sur le fonctionnement du cylindre.

12. Procédé selon les revendications 9 ou 10, caractérisé en ce qu'on affiche en continu la courbe représentative de l'évolution de ce signal électrique dans le temps, en ce qu'on compare la courbe relevée avec les courbes des autres cylindres et ce qu'on en déduit un diagnostic sur le fonctionnement du moteur.

13. Procédé selon l'une quelconque des revendications 9 à 12, caractérisé en ce qu'on détecte les instants d'occurrence des crêtes du signal électrique, en ce qu'on mesure la durée séparant deux crêtes successives et en ce qu'on en déduit la vitesse de rotation du moteur.

14. Procédé selon la revendication 13, caractérisé en ce qu'on détecte les crêtes inférieures du signal électrique.

15. Procédé selon l'une quelconque des revendications 9 à 12, appliqué à un moteur à explosion à quatre temps, caractérisé en ce qu'on détecte les temps d'occurence des maximums d'amplitude du signal électrique, lesquels maximums correspondent au franchissement du point mort haut par le piston.

16. Procédé selon la revendication 13 ou 14 pour régler les caractéristiques de fonctionnement d'un moteur, caractérisé en ce que l'on agit sur un organe de réglage de richesse de chaque cylindre jusqu'à l'obtention d'un rapport air/essence idéal pour le fonctionnement du moteur et correspondant à son régime maximal.

## Claims

1. A device for determining operating characteristics of a multicylinder combustion engine in which each cylinder is provided with an intake duct for the air/fuel mixture which is equipped with a member for adjusting the flow rate of said mixture and which opens into said cylinder through an inlet port, an external piezoelectric pressure sensor being connected to said intake duct between the adjusting member and the inlet port of the cylinder, the pressure sensor being independent of the components to be monitored and being adapted so as to detect continuously the pressure in the intake duct between the control member and the inlet port of the cylinder, the device comprising conversion means for converting continuously said pressure into an analog electrical signal representative of said pressure and of variations thereof, means for processing the electrical signal, said processing means comprising display means adapted for continuously displaying a curve representative of the variations of said electrical signal.

2. The device as claimed in claim 1, further comprising means (12) for processing the electrical signal adapted for supplying informations representative of at least one desired characteristic of the operation of the cylinder.

3. The device as claimed in one of claims 1 and 2, further comprising means for processing the electrical signal in such a way as to obtain corresponding average values for each cylinder of the engine.

4. The device as claimed in anyone of claims 1 to 3, characterized in that the sensor is connected to the intake duct with a flexible tube.

5. The device as claimed in anyone of claims 1 to 4, characterized in that the means (12) for processing the electrical signal furthermore comprise detection means adapted for detecting the peaks of the electrical signal, means for measuring the time adapted for measuring the period of time between two successive peaks, and calculating means adapted for deducing the speed of rotation of the engine therefrom.

6. The device as claimed in claim 5, characterized in that it is adapted so that the detection means will detect the lower peaks of the electrical signal.

7. The device as claimed in claim 5, characterized in that the means (12) for processing the electrical signal comprise :
- inversion means (13) for inverting the electrical signal supplied by the conversion means,
- the peak-detection means (14) being connected to the output of said inversion means,
- comparison means (15) for comparing the signal supplied by the inversion means (13) and the signal supplied by the peak-detection means (14),
- and means (16) for utilizing the output signal of the comparison means (15).

8. The device as claimed in anyone of claims 1 to 7, characterized in that it furthermore comprises means (17) for averaging the values of the analog signal supplied by the pressure sensor (11).

9. A process for determining the operating characteristics of a multicylinder combustion engine in which each cylinder is provided with an intake duct for the air/fuel mixture which is equipped with a member for adjusting the flow rate of said mixture and which opens into the cylinder through an inlet port, an external piezoelectric pressure sensor being connected to said intake duct between the adjusting member and the inlet port of the cylinder, said process comprising steps of :
- detecting continuously the pressure in the intake duct between the adjusting member and the inlet port of the cylinder,
- converting said pressure continuously into an analog electrical signal representative of said pressure and of variations thereof, and
- processing the electrical signal so as to display continuously a curve representative of the variations of said electrical signal.

10. The process as claimed in claim 9, characterized in that in a further step characteristics of all the cylinders of the engine are compared.

11. The process as claimed in claim 9 or 10, characterized in that the curve representative of the development of said electrical signal over time is displayed, in that the stated curve is compared with a reference curve, and in that a diagnosis on the operation of the cylinder is deduced therefrom.

12. The process as claimed in claims 9 or 10, characterized in that the curve representative of the development of said electrical signal over time is continuously displayed, in that the stated curve is compared with curves of the other cylinders, and in that a diagnosis on the operation of the engine is deduced therefrom.

13. The process as claimed in anyone of claims 9 to 12, characterized in that instants at which the peaks of the electrical signal occur are detected, in that the period of time between two successive peaks is measured, and in that the speed of rotation of the engine is deduced therefrom.

14. The process as claimed in claim 13, characterized in that the lower peaks of the electrical signal are detected.

15. The process as claimed in anyone of claims 9 to 12, applied to a four-stroke combustion engine, characterized in that the times at which the amplitude maxima of the electrical signal occur are detected, the said maxima corresponding to the passing of the top dead center position by the piston.

16. The process as claimed in claim 13 or 14 for adjusting the operating characteristics of an engine, characterized in that a member for adjusting the richness of each cylinder is acted upon until an air/gasoline ratio ideal for the operation of the engine and corresponding to maximum speed thereof is obtained.

## Patentansprüche

1. Gerät zur Bestimmung der Funktionsmerkmale eines Verbrennungsmotors mit mehreren Zylindern, bei dem jeder Zylinder über eine Zuleitung für das Kraftstoff-Luft-Gemisch verfügt, die eine Regelvorrichtung für den Gemischdurchfluß aufweist und über eine Eintrittsöffnung in den Zylinder mündet, wobei ein externer piezoelektrischer Drucksensor zwischen dem Durchflußregler und der Eintrittsöffnung im Zylinder mit dieser Zuleitung verbunden ist, und wobei der Drucksensor unabhängig von den zu kontrollierenden Komponenten und so beschaffen ist, daß er fortlaufend den Druck in der Zuleitung zwischen dem Regler und der Eintrittsöffnung im Zylinder mißt, wobei das Gerät Vorrichtungen zur fortlaufenden Umwandlung des besagten Drucks in ein elektrisches Analogsignal aufweist, das diesen Druck und seine Schwankungen darstellt, außerdem Vorrichtungen zur Verarbeitung des elektrischen Signals, wobei letztere wiederum Vorrichtungen zur fortlaufenden Anzeige der die Änderungen dieses elektrischen Signals darstellenden Kurve aufweisen.

2. Gerät nach Anspruch, umfassend außerdem Vorrichtungen (12) zur Verarbeitung des elektrischen Signals, die geeignet sind, repräsentative Informationen über mindestens ein gewünschtes Funktionsmerkmal des Zylinders zu liefern.

3. Gerät nach einem der Ansprüche 1 und 2, umfassend außerdem Vorrichtungen zur Verarbeitung des elektrischen Signals, um so entsprechende Mittelwerte für jeden Motorzylinder zu erhalten.

4. Gerät nach einem der Ansprüche 1 bis 2, dadurch gekennzeichnet, daß der Sensor über eine biegsame Leitung an die Zuleitung angeschlossen ist.

5. Gerät nach einem der Ansprüche 1 bis 4, dadurch gekennzeichnet, daß die Vorrichtungen (12) zur Verarbeitung des elektrischen Signals außerdem Erfassungsvorrichtungen zum Erfassen der Scheitelwerte des elektrischen Signals aufweisen, des weiteren Zeitmeßvorrichtungen, mit denen man die zeitlichen Abstände zwischen zwei aufeinanderfolgenden Scheitelwerten messen kann, sowie Rechenvorrichtungen, mit denen man daraus die Umdrehungsgeschwindigkeit des Motors ableiten kann.

6. Gerät nach Anspruch 5, dadurch gekennzeichnet, daß es so ausgestattet ist, daß die Erfassungsvorrichtungen die unteren Scheitelwerte des elektrischen Signals erfassen.

7. Gerät nach Anspruch 5, dadurch gekennzeichnet, daß die Vorrichtungen (12) zur Verarbeitung des elektrischen Signals umfassen:
- Vorrichtungen (13) zum Umkehren des von den Umwandlungsvorrichtungen gelieferten elektrischen Signals,
- die Vorrichtungen zur Ermittlung der Scheitelwerte (14), die mit dem Ausgang der besagten Umkehrvorrichtungen verbunden sind,
- Abgleichvorrichtungen (15) zum Vergleichen des von den Umkehrvorrichtungen (15) gelieferten Signals mit dem von den Erfassungsvorrichtungen für die Scheitelwerte (14) gelieferten Signals,
- sowie Vorrichtungen (16) zur Auswertung des Ausgangssignals der Abgleichvorrichtungen (15).

8. Gerät nach einem der Ansprüche 1 bis 7, dadurch gekennzeichnet, daß es außerdem Vorrichtungen (17) zur Mittelung der Werte des vom Drucksensor (11) gelieferten Analogsignals aufweist.

9. Verfahren zur Bestimmung der Funktionsmerkmale eines Verbrennungsmotors mit mehreren Zylindern, bei dem jeder Zylinder über eine Zuleitung für das Kraftstoff-Luft-Gemisch verfügt, die eine Regelvorrichtung für den Gemischdurchfluß aufweist und über eine Eintrittsöffnung in den Zylinder mündet, wobei ein externer piezoelektrischer Drucksensor zwischen dem Durchflußregler und der Eintrittsöffnung im Zylinder an diese Zuleitung angeschlossen ist, ein Verfahren, das folgende Schritte umfaßt:
- der Druck in der Zuleitung zwischen dem Durchflußregler und der Eintrittsöffnung in den Zylinder wird fortlaufend erfaßt,
- dieser Druck wird fortlaufend in ein elektrisches Analogsignal umgewandelt, das diesen Druck und seine Schwankungen darstellt, und
- das elektrische Signal wird fortlaufend verarbeitet, um die die Veränderungen dieses elektrischen Signals darstellende Kurve anzuzeigen.

10. Verfahren nach Anspruch 9, dadurch gekennzeichnet, daß man in einem weiteren Schritt die Merkmale aller Zylinder des Motors vergleicht.

11. Verfahren nach Anspruch 9 oder 10, dadurch gekennzeichnet, daß die für die Entwicklung dieses elektrischen Signals über die Zeit repräsentative Kurve fortlaufend angezeigt wird, sowie dadurch, daß man die erhaltene Kurve mit einer Referenzkurve vergleicht und daraus eine Funktionsdiagnose des Zylinders ableitet.

12. Verfahren nach Anspruch 9 oder 10, dadurch gekennzeichnet, daß die für die Entwicklung dieses elektrischen Signals über die Zeit repräsentative Kurve fortlaufend angezeigt wird, sowie dadurch, daß man die erhaltene Kurve mit einer Referenzkurve vergleicht und daraus eine Funktionsdiagnose des Motors ableitet.

13. Verfahren nach einem der Ansprüche 9 bis 12, dadurch gekennzeichnet, daß man die Zeitpunkte des Auftretens von Scheitelwerten des elektrischen Signals erfaßt, daß man den zeitlichen Abstand zwischen zwei aufeinanderfolgenden Scheitelwerten mißt und daraus die Umdrehungsgeschwindigkeit des Motors ableitet.

14. Verfahren nach Anspruch 13, dadurch gekennzeichnet, daß die unteren Scheitelwerte des elektrischen Signals ermittelt werden.

15. Verfahren nach einem der Ansprüche 9 bis 12, angewandt auf einen Viertakt-Verbrennungsmotor, dadurch gekennzeichnet, daß man die Zeitpunkte des Auftretens der maximalen Amplituden des elektrischen Signals ermittelt, die dem Überschreiten des oberen Totpunkts durch den Kolben entsprechen.

16. Verfahren nach Anspruch 13 oder 14 zur Einstellung der Funktionsmerkmale eines Motors, dadurch gekennzeichnet, daß man einen Regler für den Gehalt jedes Zylinders betätigt, bis man ein für die Funktion des Motors ideales und seiner Höchstleistung entsprechendes Benzin-Luft-Gemisch erhält.
